(19) 

**Europäisches Patentamt**
**European Patent Office**
**Office européen des brevets**

(11) **EP 4 270 430 A1**

(12) **EUROPEAN PATENT APPLICATION**
published in accordance with Art. 153(4) EPC

(43) Date of publication:
01.11.2023 Bulletin 2023/44

(21) Application number: 21915124.8

(22) Date of filing: 20.12.2021

(51) International Patent Classification (IPC):
$H01G\ 11/06^{(2013.01)}$   $H01G\ 11/56^{(2013.01)}$
$H01M\ 10/052^{(2010.01)}$   $H01M\ 10/0565^{(2010.01)}$
$H01M\ 10/0567^{(2010.01)}$   $H01M\ 10/0568^{(2010.01)}$
$H01M\ 50/409^{(2021.01)}$

(52) Cooperative Patent Classification (CPC):
H01G 11/06; H01G 11/56; H01M 10/052;
H01M 10/0565; H01M 10/0567; H01M 10/0568;
H01M 50/409; Y02E 60/10

(86) International application number:
PCT/JP2021/046898

(87) International publication number:
WO 2022/145264 (07.07.2022 Gazette 2022/27)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.12.2020  JP 2020218341
28.09.2021  JP 2021157710

(71) Applicant: **DKS Co. Ltd.**
**Kyoto-shi, Kyoto 600-8873 (JP)**

(72) Inventors:
• **OKUHARA, Junshi**
 **Kyoto-shi, Kyoto 600-8873 (JP)**
• **KANEKO, Fumiya**
 **Kyoto-shi, Kyoto 600-8873 (JP)**

(74) Representative: **TBK**
**Bavariaring 4-6**
**80336 München (DE)**

(54) **ELECTROLYTE AND ELECTRICITY STORAGE DEVICE**

(57) Techniques relating to an electrolyte having high ion conductivity and high strength are provided. The electrolyte includes an ionic liquid, an inorganic oxide, and a binder, wherein the binder is formed from raw materials that are a polycarbonate polyol and a polyisocyanate, and the binder includes, at an end, at least one functional group selected from the group consisting of a trialkoxysilyl group having 1 to 4 carbon atoms, an epoxy group, and an oxetanyl group.

EP 4 270 430 A1

**Description**

Technical Field

The present invention relates to an electrolyte and a storage device.

Background Art

It is known that secondary batteries are used as power sources of mobile terminals such as notebook computers, cellular phones, and PDAs (Personal Digital Assistants) (for example, Patent Literature 1).

Patent Literatures 1 and 2 describe secondary batteries including an electrolyte using, as a binder, polyvinylidene fluoride (PVDF), and a separator.

Citation List

Patent Literature

PTL 1: Japanese Unexamined Patent Application Publication No. 2015-090777
PTL 2: Japanese Unexamined Patent Application Publication No. 2017-017041

Summary of Invention

Technical Problem

The techniques described in PTLs 1 and 2 essentially involve use of a separator. However, when an electrolyte has sufficient strength, such a separator is not necessarily used. In addition, in general, there has been a demand for an electrolyte having high ion conductivity. Thus, development of techniques relating to an electrolyte having sufficient strength and high ion conductivity has been in demand.

Solution to Problem

The present invention has been made in order to address such a problem and can be carried out as the following embodiments.

· An embodiment according to the present invention provides an electrolyte. This electrolyte includes an ionic liquid, an inorganic oxide, and a binder, wherein the binder is formed from raw materials that are a polycarbonate polyol and a polyisocyanate, and the binder includes, at an end, at least one functional group selected from the group consisting of a trialkoxysilyl group having 1 to 4 carbon atoms, an epoxy group, and an oxetanyl group.

This embodiment can provide an electrolyte having high ion conductivity and high strength.

· In the electrolyte according to such an embodiment, an additive different from the inorganic oxide may be further included and the additive may be at least one of a boron compound or an aluminum compound.

This embodiment can provide an electrolyte having higher ion conductivity and high strength.

· In the electrolyte according to such an embodiment, the additive may be the boron compound, and a number of moles of the boron compound relative to 1 kg of the electrolyte may be 0.55 mol/kg or less.

In this embodiment, use of a small amount of additive can effectively increase the ion conductivity.

· In the electrolyte according to such an embodiment, the additive may be the aluminum compound, and a number of moles of the aluminum compound relative to 1 kg of the electrolyte may be 0.05 mol/kg or less.

In this embodiment, use of a small amount of additive can effectively increase the ion conductivity.
· In the electrolyte according to such an embodiment, the additive may be a borate ester.

This embodiment can provide an electrolyte having higher ion conductivity and high strength.
· In the electrolyte according to such an embodiment, the borate ester may be at least one of trimethyl borate or triethyl borate.

This embodiment can provide an electrolyte having higher ion conductivity and high strength.
· In the electrolyte according to such an embodiment, the electrolyte may include, as the inorganic oxide, at least one of silicon oxide or aluminum oxide.

This embodiment can provide an electrolyte having higher ion conductivity and high strength.
· In the electrolyte according to such an embodiment, the binder may have a weight-average molecular weight of 10,000 or more and 120,000 or less.

This embodiment can increase the transport number.
· Another embodiment of the present invention can provide a storage device including the electrolyte according to such an embodiment.

Description of Embodiments

Hereinafter, preferred embodiments of the present invention will be described.

<Electrolyte>

An electrolyte according to an embodiment of the present invention includes an ionic liquid, an inorganic oxide, and a binder. The binder is formed from raw materials that are a polycarbonate polyol and a polyisocyanate, and the binder includes, at an end, at least one functional group selected from the group consisting of a trialkoxysilyl group having 1 to 4 carbon atoms, an epoxy group, and an oxetanyl group. This embodiment can provide an electrolyte having high ion conductivity and high strength. The electrolyte according to this embodiment is in a quasi-solid state or in a gel state.

<Binder>

(Polycarbonate polyol)

The polycarbonate polyol is not particularly limited and can be, for example, a polycarbonate polyol ordinarily used in the technical field. Examples of the polycarbonate polyol include a carbonate polyol of 1,6-hexanediol, a carbonate polyol of 1,4-butanediol and 1,6-hexanediol, a carbonate polyol of 1,5-pentanediol and 1,6-hexanediol, and a carbonate polyol of 3-methyl-1,5-pentanediol and 1,6-hexanediol. More specifically, examples include PCDL T-6001, T-6002, T-5651, T-5652, T-5650J, T-4671, and T-4672 manufactured by Asahi Kasei Corporation, KURARAY POLYOL C-590, C-1050, C-1050R, C-1090, C-2050, C-2050R, C-2070, C-2070R, C-2090, C-2090R, C-3090, C-3090R, C-4090, C-4090R, C-5090, C-5090R, C-1065N, C-2065N, C-1015N, and C-2015N manufactured by KURARAY CO., LTD., and ETERNACOLL (registered trademark) UH-50, UH-100, UH-200, UH-300, UM-90 (3/1), UM-90 (1/1), UM-90 (1/3), and UC-100 manufactured by Ube Industries, Ltd.

(Polyisocyanate)

The polyisocyanate is not particularly limited and can be, for example, an organic polyisocyanate. The organic polyisocyanate is not particularly limited and examples include aliphatic polyisocyanates, alicyclic polyisocyanates, aromatic polyisocyanates, and aromatic-aliphatic polyisocyanates. Examples of the aliphatic polyisocyanates include tetramethylene diisocyanate, dodecamethylene diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate. Examples of the alicyclic polyisocyanates include isophorone diisocyanate, hydrogenated xylylene diisocyanate, 4,4'-dicyclohexylmethane diisocyanate, 1,4-cyclohexane diisocyanate, methylcyclohexylene diisocyanate, and 1,3-bis(isocyanatomethyl)cyclohexane. Examples of the aromatic polyisocyanates include tolylene diisocyanate, 2,2'-diphenylmethane diisocyanate, 2,4'-diphenylmethane diisocyanate, 4,4'-diphenylmethane diisocyanate (MDI), 4,4'-dibenzyl diisocyanate, 1,5-naphthylene diisocyanate, xylylene diisocyanate, 1,3-phenylene diisocyanate, and 1,4-phenylene diisocyanate. Examples of the aromatic-aliphatic polyisocyanates include dialkyldiphenylmethane diisocyanate, tetraalkyldiphenylmethane diisocyanate, and $\alpha,\alpha,\alpha,\alpha$-tetramethylxylylene diisocyanate. In addition, examples of the polyisocyanate include dimers or trimers of the organic polyisocyanates and modified polyisocyanates of the organic polyisocyanates such as biuret-modified isocyanates. Such polyisocyanates may be used alone or in combination of two or more thereof.

The polyisocyanate is preferably an aromatic polyisocyanate and an alicyclic polyisocyanate, more preferably an alicyclic polyisocyanate. Specifically, the polyisocyanate is preferably 4,4'-dicyclohexylmethane diisocyanate, isophorone diisocyanate, or hydrogenated diphenylmethane diisocyanate.

In this embodiment, the binder includes, at an end, at least one functional group selected from the group consisting of a trialkoxysilyl group having 1 to 4 carbon atoms, an epoxy group, and an oxetanyl group. Specifically, the binder includes, at the polyisocyanate-side end, such a functional group. From the viewpoint of providing high ion conductivity, the polyisocyanate preferably includes, at an end, a trialkoxysilyl group having 1 to 4 carbon atoms.

The method of introducing, to the polyisocyanate-side end of the binder, at least one functional group selected from the group consisting of a trialkoxysilyl group having 1 to 4 carbon atoms, an epoxy group, and an oxetanyl group may be, for example, a method of causing a compound including such a functional group and an active hydrogen group to react with the polyisocyanate-side end of the binder.

Examples of the compound including a trialkoxysilyl group having 1 to 4 carbon atoms and an active hydrogen group include alkoxysilyl compounds including a primary amino group and alkoxysilyl compounds including a primary amino group and a secondary amino group. Specific examples include alkoxysilyl group-containing monoamines such as γ-aminopropyltrimethoxysilane, γ-aminopropyltriethoxysilane, and N-phenyl-γ-aminopropyltrimethoxysilane, N-β(aminoethyl)γ-aminopropyltrimethoxysilane (N-2-(aminoethyl)-3-aminopropyltrimethoxysilane), N-β(aminoethyl)γ-aminopropyltriethoxysilane (N-2-(aminoethyl)-3-aminopropyltriethoxysilane), N-β(aminoethyl)γ-aminopropylmethyldimethoxysilane (N-2-(aminoethyl)-3-aminopropylmethyldimethoxysilane), and N-β(aminoethyl) γ-aminopropylmethyldiethoxysilane (N-2-(aminoethyl)-3-aminopropylmethyldiethoxysilane).

Examples of the compound including an epoxy group and an active hydrogen group include 2,3-epoxy-1-propanol (glycidol) and 1-[4-(2-hydroxyethyl)phenoxy]-2,3-epoxypropane.

Examples of the compound including an oxetanyl group and an active hydrogen group include (3-ethyloxetan-3-yl)methanol and 3-oxetanol.

As a raw material for the binder, a polyol other than polycarbonate polyols may be further used. Examples of the polyol include polyolefin polyols, polyhydric alcohols, polyether polyols, polyester polyols, polyether ester polyols, polyacrylic polyols, polyacetal polyols, polysiloxane polyols, and fluoropolyols.

In this Description, the polyolefin polyols refer to compounds that are polymers or copolymers of diolefins having 4 to 12 carbon atoms such as butadiene and isoprene and containing hydroxy groups. The polyolefin polyols are not particularly limited and examples include copolymers of a diolefin having 4 to 12 carbon atoms and an α-olefin having 2 to 22 carbon atoms. The method of introducing a hydroxy group is not particularly limited and examples include a method of causing a diene monomer to react with hydrogen peroxide. Furthermore, the remaining double bonds may be hydrogenated to provide a saturated aliphatic. Examples of such polyolefin polyols include "NISSO-PB G" series manufactured by Nippon Soda Co., Ltd., "Poly bd" series and "EPOL (registered trademark)" manufactured by Idemitsu Kosan Co., Ltd., and "Kraysol (registered trademark)" series manufactured by CRAY VALLEY.

In this Description, the polyhydric alcohols refer to polyols including three or more hydroxy groups in a single molecule. The polyhydric alcohols are not particularly limited and examples include polyhydric alcohols such as trimethylolpropane, glycerol, and pentaerythritol and oxyalkylene derivatives of the foregoing. Other examples of the polyhydric alcohols include ester compounds between such a polyhydric alcohol or oxyalkylene derivative and a polycarboxylic acid, polycarboxylic anhydride, or polycarboxylic ester. An additional use of such a polyhydric alcohol provides high film strength, which is preferred.

The polyether polyols are not particularly limited and examples include alkylene derivatives of polyhydric alcohols, polytetramethylene glycol, and polythioether polyol.

The polyester polyols and polyether ester polyols are not particularly limited and examples include esterified compounds between a polyhydric alcohol or polyether polyol and a polycarboxylic acid or polycarboxylic anhydride. Other examples of the polyester polyols and polyether ester polyols include castor oil polyol and polycaprolactone polyol.

Of the other polyols, polyether polyols and polyester polyols are preferred. The other polyols can be used alone or in combination of two or more thereof. Such another polyol may be used in combination with a compound having a single hydroxy group.

The weight-average molecular weight of the binder is not particularly limited and is preferably 5,000 or more and 300,000 or less, more preferably 10,000 or more and 120,000 or less. The weight-average molecular weight of the binder is, from the viewpoint of increasing the transport number, more preferably 25,000 or more and 100,000 or less, particularly preferably 33,000 or more and 50,000 or less. The weight-average molecular weights used herein are values measured by the GPC column chromatography method under the following conditions.

·Pump: LC-20AD manufactured by SHIMADZU CORPORATION
·Columns: Shodex OH pak SB-806M (8.0 mm$\varphi \times$ 300 mm) manufactured by SHOWA DENKO K. K. $\times$ 2
·Mobile phase: 50 mmol/L lithium bromide-containing N,N-dimethylformamide
·Flow rate: 0.5 mL/min
·Temperature: 50°C
·Column heater: CTO-20A manufactured by SHIMADZU CORPORATION
·Detector: differential refractometer (RI) RID-20A manufactured by SHIMADZU CORPORATION
·Injection amount: 100 $\mu$L
·Autosampler: SIL-20AHT manufactured by SHIMADZU CORPORATION

<Method for producing binder>

The method for producing the binder is not particularly limited and a publicly known method can be used. The method for producing the binder is, for example, the following method. First, a compound including at least one functional group selected from the group consisting of a trialkoxysilyl group having 1 to 4 carbon atoms, an epoxy group, and an oxetanyl group and an active hydrogen group, a polyisocyanate, a polycarbonate polyol, and the like were caused to react under reaction conditions of 30°C to 130°C and about 0.5 hours to about 10 hours and subsequently, as needed, cooled to 5°C to 45°C, to thereby provide the binder. Note that, as the solvent, an appropriate organic solvent such as N-methyl-2-pyrrolidone (NMP) can be used. In this case, a ratio (total isocyanate equivalent/total active hydrogen equivalent) between the total isocyanate equivalent of the polyisocyanate and the total active hydrogen equivalent of the polycarbonate polyol, the compound including at least one functional group selected from the group consisting of a trialkoxysilyl group having 1 to 4 carbon atoms, an epoxy group, and an oxetanyl group and an active hydrogen group, and another compound including an active hydrogen group is preferably 0.9 to 1.0. Note that, in this Description, the active hydrogen groups refer to a hydroxy group, a primary amino group, and a secondary amino group.

<Inorganic oxide>

The electrolyte according to this embodiment includes an inorganic oxide. The inorganic oxide is not particularly limited and examples include silicon oxide, titanium oxide, aluminum oxide (alumina), zirconium oxide, hafnium oxide, niobium oxide, tantalum oxide, magnesium oxide, calcium oxide, strontium oxide, barium oxide, tin oxide, and lead oxide. Alternatively, as the inorganic oxide, an oxide-based solid electrolyte (SE: Solid Electrolyte) may be used. The oxide-based solid electrolyte is not particularly limited and examples include LICGC (registered trademark, composition: $Li_2O$-$Al_2O_3$-$SiO_2$-$P_2O_5$-$TiO_2$) manufactured by OHARA INC. The inorganic oxide is preferably silicon oxide and aluminum oxide, more preferably aluminum oxide.

<Additive>

To the electrolyte, an additive different from the inorganic oxide is preferably added. This additive is preferably, for example, at least one of a boron compound or an aluminum compound. This additive is added to the electrolyte, so that the functional group at an end of the binder and the additive are inferentially bonded together, which inferentially results in a further increase in the ion conductivity.

The amount of the additive added is not particularly limited, and is, in a case where the additive is a boron compound, relative to 100 parts by mass of the electrolyte, preferably 0.4 parts by mass or more, more preferably 0.8 parts by mass or more. The amount of the additive added is, in a case where the additive is a boron compound, relative to 100 parts by mass of the electrolyte, preferably 2.2 parts by mass or less, more preferably 1.6 parts by mass or less, still more preferably 1.2 parts by mass or less. The amount of the additive added is, in a case where the additive is an aluminum compound, relative to 100 parts by mass of the electrolyte, preferably 0.04 parts by mass or more, more preferably 0.08 parts by mass or more. The amount of the additive added is, in a case where the additive is an aluminum compound, relative to 100 parts by mass of the electrolyte, preferably 0.4 parts by mass or less, more preferably 0.32 parts by mass or less, still more preferably 0.24 parts by mass or less.

The number of moles of the additive added is not particularly limited, and is, in a case where the additive is a boron compound, relative to 1 kg of the electrolyte, preferably 0.1 mol/kg or more, more preferably 0.2 mol/kg or more. The number of moles of the additive added is, in a case where the additive is a boron compound, relative to 1 kg of the electrolyte, preferably 0.55 mol/kg or less, more preferably 0.4 mol/kg or less, still more preferably 0.3 mol/kg or less. The number of moles of the additive added is, in a case where the additive is an aluminum compound, relative to 1 kg of the electrolyte, preferably 0.005 mol/kg or more, more preferably 0.01 mol/kg or more. The number of moles of the additive added is, in a case where the additive is an aluminum compound, relative to 1 kg of the electrolyte, preferably 0.05 mol/kg or less, more preferably 0.04 mol/kg or less, still more preferably 0.03 mol/kg or less. In the case of addition of an aluminum compound, compared with the case of addition of a boron compound, addition of a small amount tends to result in an increase in the ion conductivity.

The boron compound is not particularly limited and examples include borate esters, borane compounds, boronic acids, and boronic anhydrides. The borate esters are not particularly limited and examples include trimethyl borate (TMB), triethyl borate, tripropyl borate, tributyl borate, triisobutyl borate, tri-t-butyl borate, triphenyl borate, tritoluyl borate, and trimethoxyboroxine. The borane compounds are not particularly limited and examples include dimethylamine borane, trimethylamine borane, triethylamine borane, and morpholine borane. The boronic acids are not particularly limited and examples include propylboronic acid, isopropyl boronic acid, butylboronic acid, t-butylboronic acid, and phenylboronic acid. The boronic anhydrides are not particularly limited and examples include propylboronic anhydride, isopropyl boronic anhydride, butylboronic anhydride, t-butylboronic anhydride, and phenylboronic anhydride. The boron compound is preferably borate esters, more preferably trimethyl borate (TMB) and triethyl borate.

The aluminum compound is not particularly limited and examples include aluminum alkoxides. The aluminum alkoxides are not particularly limited and examples include aluminum methoxide, aluminum ethoxide, aluminum isopropoxide (AIP), and aluminum sec-butoxide. The aluminum compound is preferably aluminum isopropoxide (AIP).

<Ionic liquid>

The electrolyte according to this embodiment includes an ionic liquid. The cation of the ionic liquid is not particularly limited, and examples include butylpyridinium, 1-ethyl-3-methylimidazolium (EMIm), 1-butyl-3-methylimidazolium (BMIm), 1,2-dimethyl 3-propylimidazolium, 1-methyl-1-propylpiperidinium, 1-butyl-1-methylpyrrolidinium, N,N-diethyl-N-methyl-N-(2-methoxyethyl)ammonium (DEME), 1-methyl-1-propylpyrrolidinium (P13), N-methyl-N-propylpiperidinium (PP13), and N-ethyl-N-butylpyrrolidinium (P24). The cation of the ionic liquid is preferably 1-ethyl-3-methylimidazolium (EMIm) because of good electrical characteristics.

The anion of the ionic liquid is not particularly limited and examples include bis(fluorosulfonyl)imide (FSI), bis(trifluoromethanesulfonyl)imide (TFSI), tris(trifluoromethanesulfonyl)methide, fluorosulfonyl(trifluoromethanesulfonyl)imide, bis(perfluoroethylsulfonyl)amide (BETI), tetrafluoroborate (BF4), trifluoromethanetrifluoroborate (CF3BF3), pentafluoroethyltrifluoroborate (CF3CF2BF3), and hexafluorophosphate (PF6). The anion of the ionic liquid is preferably bis(fluorosulfonyl)imide (FSI) because of good electrical characteristics.

Examples of an electrolyte salt used for the electrolyte according to this embodiment include lithium salts. Examples of the lithium salts include lithium hexafluorophosphate (LiPF6), lithium tetrafluoroborate (LiBF4), lithium perchlorate (LiClO4), lithium bis(trifluoromethanesulfonyl)imide (LiTFSI), lithium trifluoromethanesulfonate (LiTFS), and lithium bisfluorosulfonylimide (LiFSI). The electrolyte salt is preferably lithium bisfluorosulfonylimide (LiFSI) because of good electrical characteristics. Such a lithium salt is desirably included in the electrolyte solution at a concentration of ordinarily 0.1 to 2.0 mol/l, preferably 0.3 to 1.5 mol/l.

The concentration of the electrolyte salt is not particularly limited, and is, from the viewpoint of suppressing an excessive increase in the resistance during charging-discharging, relative to 1 kg of the electrolyte solution, preferably 0.5 mol/kg or more, more preferably 0.7 mol/kg or more, still more preferably 1.0 mol/kg or more, particularly preferably 2.0 mol/kg or more. The concentration of the electrolyte salt is not particularly limited, and is, from the viewpoint of suppressing a decrease in the ion conductivity due to an increase in the viscosity, relative to 1 kg of the electrolyte solution, preferably 3.5 mol/kg or less, more preferably 3.3 mol/kg or less, still more preferably 3.0 mol/kg or less.

The amount of the inorganic oxide added is not particularly limited, and is, relative to 100 parts by mass of the electrolyte, preferably 30 parts by mass or more, more preferably 40 parts by mass or more, still more preferably 43 parts by mass or more. The amount of the inorganic oxide added is, relative to 100 parts by mass of the electrolyte, preferably 55 parts by mass or less, more preferably 53 parts by mass or less, still more preferably 50 parts by mass or less.

The amount of the ionic liquid-containing electrolyte solution added is not particularly limited, and is, relative to 100 parts by mass of the electrolyte, preferably 30 parts by mass or more, more preferably 40 parts by mass or more, still more preferably 43 parts by mass or more. The amount of the ionic liquid-containing electrolyte solution added is, relative to 100 parts by mass of the electrolyte, preferably 55 parts by mass or less, more preferably 53 parts by mass or less, still more preferably 50 parts by mass or less.

The amount of the binder added is not particularly limited, and is, relative to 100 parts by mass of the electrolyte, preferably 2 parts by mass or more, more preferably 3 parts by mass or more, still more preferably 4 parts by mass or more. The amount of the binder added is, relative to 100 parts by mass of the electrolyte, preferably 15 parts by mass or less, more preferably 13 parts by mass or less, still more preferably 10 parts by mass or less.

<Others>

As needed, various additives ordinarily used can be further used. Such additives are not particularly limited and examples include weathering agents, antimicrobial agents, mold inhibitors, pigments, anticorrosives, dyes, film-forming aids, inorganic crosslinking agents, organic crosslinking agents, silane coupling agents, anti-blocking agents, viscosity modifiers, leveling agents, defoaming agents, dispersing agents, light stabilizers, antioxidants, ultraviolet absorbents, inorganic fillers, organic fillers, plasticizers, lubricants, and antistatic agents.

The organic crosslinking agents are not particularly limited and examples include blocked isocyanate-based crosslinking agents, epoxy-based crosslinking agents, carbodiimide-based crosslinking agents, oxazoline-based crosslinking agents, and melamine-based crosslinking agents.

The dispersing agents are not particularly limited and can be publicly known agents having a dispersing function; for example, one or two or more selected from the following can be used: celluloses such as hydroxymethylcellulose, carboxymethylcellulose, alkali metal salts of the foregoing, methylcellulose, ethylcellulose, hydroxypropylmethylcellulose, and hydroxyethylmethylcellulose; cellulose nanofibers such as chemically modified cellulose nanofibers described in Japanese Patent No. 5626828 and Japanese Patent No. 5921960; polycarboxylic acid-based compounds such as polyacrylic acid and sodium polyacrylate; compounds having a vinylpyrrolidone structure such as polyvinylpyrrolidone; polyurethane, polyester, polyacrylamide, polyethylene oxide, polyvinyl alcohol, sodium alginate, xanthan gum, carrageenan, guar gum, agar, starch, and the like. Of these, carboxymethylcellulose salts can be preferably used.

A storage device according to the present invention is for publicly known storage devices without particular limitations, for example, lithium secondary batteries and lithium ion capacitors.

Hereinafter, as a storage device according to this embodiment, a lithium secondary battery will be described. The lithium secondary battery according to this embodiment includes, as a pair of electrodes, a positive electrode and a negative electrode, and an electrolyte held between the positive electrode and the negative electrode.

The positive electrode includes a positive electrode substrate and a positive electrode active material layer disposed on a surface of the positive electrode substrate, and the positive electrode active material layer is in contact with the electrolyte. Similarly, the negative electrode includes a negative electrode substrate and a negative electrode active material layer disposed on a surface of the negative electrode substrate, and the negative electrode active material layer is in contact with the electrolyte.

The positive electrode substrate functions as a current collector configured to collect electrons generated by the electrochemical reaction of the positive electrode active material layer. The negative electrode substrate functions as a current collector configured to collect electrons generated by the electrochemical reaction of the negative electrode active material layer. The positive electrode substrate and the negative electrode substrate are not particularly limited and publicly known metallic plates or metallic foils can be used.

The positive electrode active material used for the positive electrode active material layer of the lithium secondary battery according to this embodiment is not particularly limited as long as intercalation and de-intercalation of lithium ions can be performed. Examples include metal oxides such as $CuO$, $Cu_2O$, $MnO_2$, $V_2O_5$, $CrO_3$, $MoO_3$, $Fe_2O_3$, $Ni_2O_3$, and $CoO_3$, compound oxides between lithium and transition metal such as $LixCoO_2$, $LixNiO_2$, $LixMn_2O_4$, and $LiFePO_4$, metal chalcogenides such as $TiS_2$, $MoS_2$, and $NbSe_3$, and conductive polymer compounds such as polyacene, poly-p-phenylene, polypyrrole, and polyaniline. Of these, compound oxides that are ordinarily referred to as high-voltage compound oxides and composed of one or more of transition metals such as cobalt, nickel, and manganese and lithium are preferred from the viewpoint that the de-intercalation capability of lithium ions or high voltage tends to be provided. Specific examples of the compound oxides between cobalt, nickel, or manganese, and lithium include $LiCoO_2$, $LiMnO_2$, $LiMn_2O_4$, $LiNiO_2$, $LiNi_xCo_{(1-x)}O_2$, and $LiMn_aNi_bCo_c$ (a + b + c = 1). Such lithium compound oxides doped with small amounts of elements such as fluorine, boron, aluminum, chromium, zirconium, molybdenum, and iron and particles of lithium compound oxides having surfaces surface-treated with carbon, $MgO$, $Al_2O_3$, $SiO_2$, or the like can also be used. Such positive electrode active materials can also be used in combination of two or more thereof.

For the negative electrode active material used for the negative electrode active material layer according to this embodiment, metallic lithium or publicly known active materials can be used without particular limitations as long as intercalation and de-intercalation of lithium ions can be performed. For example, carbon materials such as natural graphite, artificial graphite, non-graphitizing carbon, and graphitizing carbon can be used. Alternatively, metallic materials such as metallic lithium, alloys, and tin compounds, lithium transition metal nitrides, crystalline metal oxides, amorphous metal oxides, silicon compounds, conductive polymers, or the like can also be used; specific examples include $Li_4Ti_5O_{12}$ and $NiSi_5C_6$.

For the positive electrode and the negative electrode of the lithium secondary battery according to this embodiment, a conductive additive is used. For the conductive additive, electron conduction materials can be used without particular limitations as long as the battery performance is not adversely affected. Ordinarily, carbon blacks such as acetylene black and Ketjenblack are used; alternatively, conductive materials such as natural graphite (such as crystalline graphite, flake graphite, and amorphous graphite), artificial graphite, carbon whiskers, carbon fibers, metallic (such as copper, nickel, aluminum, silver, or gold) powders, metallic fibers, and conductive ceramic materials can also be used.

For the current collectors for the electrode active materials of the lithium secondary battery according to this embodiment, any electron conduction members can be used as long as they do not adversely affect the resultant battery. For example, for the positive electrode current collector, aluminum, titanium, stainless steel, nickel, baked carbon, conductive polymers, or conductive glass can be used; alternatively, for the purpose of improving adhesion, conductivity, and oxidation resistance, a member of aluminum, copper, or the like whose surface is treated with carbon, nickel, titanium, silver, or the like can be used. For the negative electrode current collector, copper, stainless steel, nickel, aluminum, titanium, baked carbon, conductive polymers, conductive glass, or Al-Cd alloy can be used; alternatively, for the purpose of improving adhesion, conductivity, and oxidation resistance, a member of copper or the like whose surface is treated with carbon, nickel, titanium, silver, or the like can be used. For such current collector materials, their surfaces can also be subjected to oxidation treatment. For their shapes, foil-shaped materials and other molded materials such as film-shaped materials, sheet-shaped materials, net-shaped materials, punched or expanded materials, lath materials, porous materials, or foam materials can also be used. The thicknesses are not particularly limited and materials having thicknesses of 1 to 100 μm are ordinarily used.

The electrodes of the lithium secondary battery according to this embodiment can be produced by mixing together materials constituting such an active material layer to prepare an electrode material having a slurry form, applying it to a substrate, and evaporating the dispersion medium.

For the electrode materials according to this embodiment, as a viscosity modifier for forming slurry, a thickener such as a water-soluble polymer can be used. Specifically, one or two or more selected from the following can be used: celluloses such as carboxymethylcellulose salts, methylcellulose, ethylcellulose, hydroxymethylcellulose, hydroxypropylmethylcellulose, and hydroxyethylmethylcellulose; polycarboxylic acid-based compounds such as polyacrylic acid and sodium polyacrylate; compounds having a vinylpyrrolidone structure such as polyvinylpyrrolidone; polyacrylamide, polyethylene oxide, polyvinyl alcohol, sodium alginate, xanthan gum, carrageenan, guar gum, agar, starch, and the like; of these, preferred are carboxymethylcellulose salts.

For the electrode materials, the method, order, and the like of mixing are not particularly limited; for example, an active material and a conductive additive mixed together in advance can be used; in this case, this mixing can be performed using a mortar, a mill mixer, a ball mill such as a planetary ball mill or a shaker ball mill, a MECHANO FUSION, or the like.

For the lithium secondary battery according to this embodiment, a separator is not necessarily used. In the case of using a separator, a separator ordinarily used for lithium secondary batteries can be used without particular limitations; examples include porous resins such as polyethylene, polypropylene, polyolefin, and polytetrafluoroethylene, ceramic, and nonwoven fabric.

The lithium secondary battery according to this embodiment can be formed so as to have a cylindrical shape, a coin shape, a prismatic shape, or another appropriate shape; while the basic configuration of the battery remains the same irrespective of the shape, the battery can be provided such that the design is changed in accordance with the purpose. For example, the cylindrical shape can be provided in the following manner: a negative electrode formed by coating a negative electrode current collector with a negative electrode active material and a positive electrode formed by coating a positive electrode current collector with a positive electrode active material are wound; the resultant wound body is placed into a battery can; a nonaqueous electrolyte solution is injected; and the battery can is sealed while insulating plates are disposed over and under the battery can. In the case of an application to a coin-shaped lithium secondary battery, a disc-shaped negative electrode, an electrolyte, a disc-shaped positive electrode, and a stainless steel plate are stacked and placed into a coin-shaped battery can; a nonaqueous electrolyte solution is injected; and the battery can is sealed.

EXAMPLES

Hereinafter, the present invention will be described further in detail with reference to Examples; however, the present invention is not limited to these.

<Example 1>

In an ionic liquid-based electrolyte solution solvent that was 1-ethyl-3-methylimidazolium bis(fluorosulfonyl)imide (EMImFSI, manufactured by DAI-ICHI KOGYO SEIYAKU CO., LTD., product name: ELEXCEL IL-110), a lithium salt that was lithium bis(fluorosulfonyl)imide (LiFSI, manufactured by KISHIDA CHEMICAL Co., Ltd., lithium battery grade (LBG)) was dissolved in a ratio of 1.0 mol/kg to prepare an electrolyte solution (IL electrolyte solution). Subsequently, 50 parts by mass of an inorganic oxide that was alumina, 45 parts by mass of the electrolyte solution, and 5 parts by mass of Binder 1 (in terms of solid content) were stirred in a rotation-revolution mixer, to thereby prepare a coating material.

Binder 1 was prepared by the following production method. First, 77 parts by mass of polycarbonatediol (product name: PCDL T5652, manufactured by Asahi Kasei Corporation, weight-average molecular weight: 2000), 1 part by mass of trimethylolpropane (molecular weight: 134.7), 14 parts by mass of isophorone diisocyanate (molecular weight: 222), 140 parts by mass of NMP, and 0.048 parts by mass of a Sn catalyst (product name: T-320) were added to a separable flask and subsequently stirred under heating at 80°C for about 2 hours to thereby cause a reaction until f-NCO reached 1.23%. Subsequently, 5 parts by mass of 3-aminopropyltriethoxysilane (product name: KBM-903, manufactured by Shin-Etsu Chemical Co., Ltd., molecular weight: 179.3) and 72 parts by mass of NMP were added to the separable flask and subsequently stirred at room temperature for about 1 hour to cause a reaction. To the resultant reactive polyurethane solution (solid content concentration: 33 mass%), 660 parts by mass of NMP was added to perform dilution to a solid content concentration of 10 mass%, to thereby provide Binder 1. Binder 1 has, at an end, a trimethoxysilyl group.

Subsequently, a substrate that was a stainless steel (SUS) plate was coated with the coating material. Subsequently, heat-drying was performed to remove the solvent and to cause a crosslinking reaction to proceed, to thereby prepare a test piece. The heat-drying was performed at 80°C for 16 hours.

<Examples other than Example 1 and Comparative Examples>

The same method as with the method described in Example 1 was performed except for changes to the compositions in Tables described later, to prepare test pieces.

In Example 3, instead of Binder 1, Binder 2 was used. Also in Example 17, instead of Binder 1, Binder 2 was used. Binder 2 was prepared by the following production method. First, to a separable flask, 77 parts by mass of polycarbonatediol (product name: ETERNACOLL UH-200, manufactured by Ube Industries, Ltd., weight-average molecular weight: 2000), 1 part by mass of trimethylolpropane (molecular weight: 134.7), 17 parts by mass of hydrogenated MDI (molecular weight: 262), 160 parts by mass of NMP, and 0.048 parts by mass of a Sn catalyst (product name: T-320) were added to the separable flask and subsequently stirred under heating at 80°C for about 2 hours to thereby cause a reaction until f-NCO reached 0.54%. Subsequently, 3.2 parts by mass of 3-ethyl-3-hydroxymethyloxetane (manufactured by TOAGOSEI CO., LTD., product name: ARON OXETANE OXT-101) and 72 parts by mass of NMP were added to the separable flask and subsequently stirred at room temperature for about 1 hour to thereby cause a reaction. To the resultant reactive polyurethane solution (solid content concentration: 33 mass%), 650 parts by mass of NMP was added to thereby perform dilution to a solid content concentration of 10 mass%, to thereby provide Binder 2. Binder 2 has, at an end, an oxetanyl group.

In Examples 7 to 16 and Examples 18 to 21, instead of Binder 1, Binder 4 was used. Binder 4 was produced by the following production method. First, 77 parts by mass of polycarbonatediol (product name: PCDL T5652, manufactured by Asahi Kasei Corporation, weight-average molecular weight: 2000), 1 part by mass of polyol (product name: DK POLYOL G-480, manufactured by DAI-ICHI KOGYO SEIYAKU CO., LTD.), 14 parts by mass of isophorone diisocyanate (molecular weight: 222), 140 parts by mass of NMP, and 0.048 parts by mass of a Sn catalyst (product name: T-320) were added to a separable flask and subsequently stirred under heating at 80°C for about 2 hours, to thereby cause a reaction until f-NCO reached 1.23%. Subsequently, 5 parts by mass of 3-aminopropyltriethoxysilane (product name: KBM-903, manufactured by Shin-Etsu Chemical Co., Ltd., molecular weight: 179.3) and 72 parts by mass of NMP were added to the separable flask and subsequently stirred at room temperature for about 1 hour to thereby cause a reaction. To the resultant reactive polyurethane solution (solid content concentration: 33 mass%), 660 parts by mass of NMP was added to thereby perform dilution to a solid content concentration of 10 mass%, to thereby provide Binder 4. Binder 4 has, at an end, a trimethoxysilyl group.

In Examples 4 and 5, the inorganic oxide, the binder, and the like were added together with an additive that was trimethyl borate (TMB) and subsequently stirred. Also in Examples 8, 10, 12 to 15, and 17, the inorganic oxide, the binder, and the like were added together with the additive that was trimethyl borate (TMB) and subsequently stirred. In Example 6, the inorganic oxide, the binder, and the like were added together with an additive that was aluminum isopropoxide (AIP) and subsequently stirred. Also in Example 18, the inorganic oxide, the binder, and the like were added together with the additive that was aluminum isopropoxide (AIP) and subsequently stirred.

In Example 19, as the inorganic oxide, instead of alumina, an oxide-based solid electrolyte (SE, product name: LICGC (registered trademark), composition: $Li_2O-Al_2O_3-SiO_2-P_2O5-TiO_2$, manufactured by OHARA INC.) was used.

In Comparative Example 1, instead of Binder 1, Binder 3 was used. Binder 3 was produced by the following production method. First, 77 parts by mass of polycarbonatediol (product name: PCDL T5652, manufactured by Asahi Kasei Corporation, weight-average molecular weight: 2,000), 1 part by mass of trimethylolpropane (molecular weight: 134.7), 14 parts by mass of isophorone diisocyanate (molecular weight: 222), 140 parts by mass of NMP, and 0.048 parts by mass of a Sn catalyst (product name: T-320) were added to a separable flask and subsequently stirred under heating at 80°C for about 2 hours, to thereby cause a reaction until f-NCO reached 1.23%. Subsequently, 3.6 parts by mass of dibutylamine (molecular weight: 129.2) and 72 parts by mass of NMP were added to the separable flask and subsequently stirred at room temperature for about 1 hour to thereby cause a reaction. To the resultant reactive polyurethane solution (solid content concentration: 33 mass%), 660 parts by mass of NMP was added, to thereby perform dilution to a solid content concentration of 10 mass%, to thereby provide Binder 3. Note that Binders 1, 2, and 3 each had a weight-average molecular weight of 30,000. Binder 4 had a weight-average molecular weight of 35,000.

In Comparative Example 2, as the binder, a binder having a polyvinylidene fluoride (PVDF)-hexafluoropropylene (HFP) mixing ratio (in terms of mass) of 95:5 was used. Also in Comparative Example 3, as the binder, the binder having a polyvinylidene fluoride (PVDF)-hexafluoropropylene (HFP) mixing ratio (in terms of mass) of 95:5 was used.

In Comparative Example 3, the inorganic oxide, the binder, and the like were added together with an additive that was trimethyl borate (TMB) and subsequently stirred.

<Evaluation>

(Ion conductivity)

For the electrolyte obtained in each of Examples and Comparative Examples, the thickness (film thickness) was measured. Subsequently, this test piece was subjected to electrochemical impedance (EIS) measurement using an impedance analyzer (product name: SP-150) manufactured by Bio-Logic SAS (Bio-Logic SAS) under a condition of frequencies of 1 MHz to 0.1 Hz, to determine bulk resistance. Subsequently, the film thickness of the electrolyte is divided by the bulk resistance, to thereby calculate the ion conductivity (unit: mS/cm). The larger the calculated value, the higher the ion conductivity.

(Transport number)

The electrolyte obtained in each of Examples and Comparative Examples was disposed between two lithium foils, to prepare a lithium symmetric cell. Subsequently, relative to the impedance and the input voltage for the lithium symmetric cell, the current value decreasing with time (current decay) was measured. Subsequently, the following formula (1) was used to determine lithium ion transport number.

[Math. 1]
[Math. 1]

$$t_{Li} = \frac{I_{SS}(V - I_0 R_0)}{I_0(V - I_{SS} R_{SS})} \quad \cdots (1)$$

(In the formula, $t_{Li}$ represents the lithium ion transport number, V represents the applied voltage, $I_0$ represents the initial current, $I_{SS}$ represents the stationary state current, $R_0$ represents the initial resistance, and $R_{SS}$ represents the stationary state resistance.)

(Lithium ion conductivity)

For the electrolytes obtained in Examples and Comparative Examples, lithium ion conductivity was calculated (unit: mS/cm). The lithium ion conductivity was calculated by multiplying the ion conductivity value by the value of the transport number.

(Film strength)

For the films of the electrolytes obtained in Examples and Comparative Examples, whether or not the films were manually peeled from the substrates was determined. In cases where peeling is achieved, the film strength is high.

Evaluation grades

Good: peelable
Poor: not peelable

The following are the results of the experiments.

[Table 1]

Table 1

| | Alumina/IL electrolyte solution/binder mass ratio | Concentration of IL electrolyte solution | Type of binder end reactive group | Additive | Ion conductivity [mS/cm] | Transport number | Li ion conductivity [mS/cm] | Film strength |
|---|---|---|---|---|---|---|---|---|
| Example 1 | 50/45/5 | 1.0 mol/kg | Trimethoxysilyl group | - | 0.73 | 0.18 | 0.13 | Good |
| Example 2 | 45/50/10 | 1.0 mol/kg | Trimethoxysilyl group | - | 0.63 | 0.18 | 0.11 | Good |
| Example 3 | 50/45/5 | 1.0 mol/kg | Oxetanyl group | - | 0.66 | 0.18 | 0.12 | Good |
| Example 4 | 50/45/5 | 1.0 mol/kg | Trimethoxysilyl group | TMB 0.080 mol/kg (0.32 mass%) | 0.94 | 0.17 | 0.16 | Good |
| Example 5 | 50/45/5 | 1.0 mol/kg | Trimethoxysilyl group | TMB 0.13 mol/kg (0.51 mass%) | 1.6 | 0.17 | 0.27 | Good |
| Example 6 | 50/45/5 | 1.0 mol/kg | Trimethoxysilyl group | AIP 0.013 mol/kg (0.10 mass%) | 1.1 | 0.16 | 0.18 | Good |
| Comparative Example 1 | 50/45/5 | 1.0 mol/kg | Dibutylamino group (no reactivity) | - | 0.73 | 0.18 | 0.13 | Poor |
| Comparative Example 2 | 50/45/5 (PVDF) | 1.0 mol/kg | No reactive groups | - | 1.0 | 0.18 | 0.18 | Poor |

[Table 2]

Table 2

| | Alumina/IL electrolyte solution/binder mass ratio | Concentration of IL electrolyte solution | Type of binder end reactive group | Additive | Ion conductivity [mS/cm] | Transport number | Li ion conductivity [mS/cm] | Film strength |
|---|---|---|---|---|---|---|---|---|
| Example 7 | 50/45/5 | 1.0 mol/kg | Trimethoxysilyl group | - | 0.87 | 0.18 | 0.16 | Good |
| Example 8 | 50/45/5 | 1.0 mol/kg | Trimethoxysilyl group | TMB 0.13 mol/kg (0.51 mass%) | 1.5 | 0.25 | 0.38 | Good |
| Example 9 | 50/45/5 | 2.0 mol/kg | Trimethoxysilyl group | - | 0.81 | 0.20 | 0.16 | Good |
| Example 10 | 50/45/5 | 2.0 mol/kg | Trimethoxysilyl group | TMB 0.13 mol/kg (0.51 mass%) | 1.0 | 0.30 | 0.30 | Good |
| Example 11 | 50/45/5 | 3.0 mol/kg | Trimethoxysilyl group | - | 0.87 | 0.28 | 0.24 | Good |
| Example 12 | 50/45/5 | 3.0 mol/kg | Trimethoxysilyl group | TMB 0.13 mol/kg (0.51 mass%) | 0.97 | 0.28 | 0.27 | Good |
| Example 13 | 50/45/5 | 3.0 mol/kg | Trimethoxysilyl group | TMB 0.26 mol/kg (1.02 mass%) | 0.88 | 0.35 | 0.31 | Good |
| Example 14 | 50/45/5 | 3.0 mol/kg | Trimethoxysilyl group | TMB 0.39 mol/kg (1.53 mass%) | 0.79 | 0.32 | 0.25 | Good |
| Example 15 | 50/45/5 | 3.0 mol/kg | Trimethoxysilyl group | TMB 0.52 mol/kg (2.04 mass%) | 0.79 | 0.27 | 0.21 | Good |
| Example 16 | 50/45/5 | 3.5 mol/kg | Trimethoxysilyl group | - | 0.67 | 0.25 | 0.17 | Good |

[Table 3]

Table 3

| | Alumina/IL electrolyte solution/binder mass ratio | Concentration of IL electrolyte solution | Type of binder end reactive group | Additive | Ion conductivity [mS/cm] | Transport number | Li ion conductivity [mS/cm] | Film strength |
|---|---|---|---|---|---|---|---|---|
| Example 17 | 50/45/5 | 1.0 mol/kg | Oxetanyl group | TMB 0.26 mol/kg (1.02 mass%) | 0.66 | 0.20 | 0.13 | Good |
| Comparative Example 3 | 50/45/5/5(PVDF) | 1.0 mol/kg | No reactive groups | TMB 0.26 mol/kg (1.02 mass%) | 1.0 | 0.17 | 0.17 | Poor |
| Example 18 | 50/45/5 | 3.0 mol/kg | Trimethoxysilyl group | AIP 0.026 mol/kg (0.20 mass%) | 0.85 | 0.35 | 0.30 | Good |
| Example 19 | 50(SE)/45/5 | 3.0 mol/kg | Trimethoxysilyl group | - | 1.2 | 0.24 | 0.28 | Good |
| Example 20 | 50/45/5 | 2.5 mol/kg | Trimethoxysilyl group | - | 0.85 | 0.23 | 0.20 | Good |
| Example 21 | 50/45/5 | 3.3 mol/kg | Trimethoxysilyl group | - | 0.77 | 0.27 | 0.21 | Good |

Comparison between Examples and Comparative Examples has demonstrated that use of the binders according to this embodiment provides electrolytes having high ion conductivity and high strength. It has also been demonstrated that addition of the additives provides further increased ion conductivity.

Industrial Applicability

The electrolyte according to this embodiment is applicable to storage devices (for example, electrodes for lithium secondary batteries). The resultant storage devices are usable for various mobile devices such as cellular phones, notebook computers, personal digital assistants (PDAs), video cameras, and digital cameras and medium-sized or large-sized storage devices mounted on power-assisted bicycles, electric vehicles, and the like.

The present invention is not limited to the above-described embodiments and can be carried out as various embodiments without departing from the spirit and scope thereof. For example, for the embodiments corresponding to the technical features in the embodiments described in Summary of Invention and the technical features in Examples, substitution or combination can be appropriately performed in order to address a portion of or the entirety of the above-described problem or to provide a portion of or the entirety of the above-described advantages. When such a technical feature is not described as an essential feature in this Description, the feature can be appropriately removed.

**Claims**

1. An electrolyte comprising an ionic liquid, an inorganic oxide, and a binder,

    wherein the binder is formed from raw materials that are a polycarbonate polyol and a polyisocyanate, and the binder includes, at an end, at least one functional group selected from the group consisting of a trialkoxysilyl group having 1 to 4 carbon atoms, an epoxy group, and an oxetanyl group.

2. The electrolyte according to claim 1, further comprising:

    an additive different from the inorganic oxide,
    wherein the additive is at least one of a boron compound or an aluminum compound.

3. The electrolyte according to claim 2,

    wherein the additive is the boron compound, and
    a number of moles of the boron compound relative to 1 kg of the electrolyte is 0.55 mol/kg or less.

4. The electrolyte according to claim 2,

    wherein the additive is the aluminum compound, and
    a number of moles of the aluminum compound relative to 1 kg of the electrolyte is 0.05 mol/kg or less.

5. The electrolyte according to claim 2 or claim 3, wherein the additive is a borate ester.

6. The electrolyte according to claim 5,
   wherein the borate ester is at least one of trimethyl borate or triethyl borate.

7. The electrolyte according to any one of claims 1 to 6,
   wherein the electrolyte comprises, as the inorganic oxide, at least one of silicon oxide or aluminum oxide.

8. The electrolyte according to any one of claims 1 to 7,
   wherein the binder has a weight-average molecular weight of 10,000 or more and 120,000 or less.

9. A storage device comprising the electrolyte according to any one of claims 1 to 8.

## INTERNATIONAL SEARCH REPORT

| International application No. |
|---|
| **PCT/JP2021/046898** |

**A.     CLASSIFICATION OF SUBJECT MATTER**

*H01G 11/06*(2013.01)i; *H01G 11/56*(2013.01)i; *H01M 10/052*(2010.01)i; *H01M 10/0565*(2010.01)i;
*H01M 10/0567*(2010.01)i; *H01M 10/0568*(2010.01)i; *H01M 50/409*(2021.01)i
FI:   H01M10/0565; H01M10/0568; H01M50/409; H01G11/06; H01G11/56; H01M10/052; H01M10/0567

According to International Patent Classification (IPC) or to both national classification and IPC

**B.     FIELDS SEARCHED**

Minimum documentation searched (classification system followed by classification symbols)

H01M10/05-10/0587; H01G11/00-11/86; H01M50/40-50/497

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII)

**C.     DOCUMENTS CONSIDERED TO BE RELEVANT**

| Category* | Citation of document, with indication, where appropriate, of the relevant passages | Relevant to claim No. |
|---|---|---|
| Y | JP 2003-157719 A (HITACHI MAXELL, LIMITED) 30 May 2003 (2003-05-30)<br>claims 1-3, paragraph [0007] | 1-4, 7-9 |
| Y | US 2019/0288333 A1 (KOREA INSTITUTE OF INDUSTRIAL TECHNOLOGY) 19 September 2019 (2019-09-19)<br>claims 1-15, paragraph [0069], examples 2-8 | 1-4, 7-9 |
| Y | KR 10-2019-0058178 A (KOREA INSTITUTE OF INDUSTRIAL TECHNOLOGY) 29 May 2019 (2019-05-29)<br>claims 1-10, paragraph [0006], examples 1-5 | 1-4, 7-9 |
| Y | JP 2006-252878 A (NIPPON ZEON COMPANY, LIMITED) 21 September 2006 (2006-09-21)<br>claims 1-5, paragraphs [0055]-[0066], examples | 2-4 |
| A | WO 2015/053201 A1 (NISSAN MOTOR COMPANY, LIMITED) 16 April 2015 (2015-04-16) | 1-9 |

☑ Further documents are listed in the continuation of Box C.       ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/046898**

C.     DOCUMENTS CONSIDERED TO BE RELEVANT

| Category* | Citation of document, with indication, where appropriate, of the relevant passages | Relevant to claim No. |
|---|---|---|
| A | US 2019/0153147 A1 (MUSE, Jay Allen, FREDIN, Nathaniel J., VENKATARAMANI, Sriram) 23 May 2019 (2019-05-23) | 1-9 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 2003-157719 | A | 30 May 2003 | (Family: none) | | | |
| US | 2019/0288333 | A1 | 19 September 2019 | KR | 10-2019-0109894 | A | |
| KR | 10-2019-0058178 | A | 29 May 2019 | (Family: none) | | | |
| JP | 2006-252878 | A | 21 September 2006 | WO | 2006/090733 | A1 | |
| WO | 2015/053201 | A1 | 16 April 2015 | US | 2016/0260966 | A1 | |
| | | | | EP | 3057158 | A1 | |
| | | | | CN | 105612637 | A | |
| | | | | KR | 10-2016-0055191 | A | |
| US | 2019/0153147 | A1 | 23 May 2019 | JP | 2021-505747 | A | |
| | | | | WO | 2019/099964 | A1 | |
| | | | | KR | 10-2020-0087826 | A | |
| | | | | CN | 111655761 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015090777 A
- JP 2017017041 A
- JP 5626828 B
- JP 5921960 B